# EUROPÄISCHE PATENTSCHRIFT

(11) **EP 3 375 657 B1**
(45) Veröffentlichungstag und Bekanntmachung des Hinweises auf die Patenterteilung: **29.01.2020**
(21) Anmeldenummer: 18000235.4
(22) Anmeldetag: 09.03.2018
(51) Int. Cl.: H01R 13/11, H01R 4/56, H01R 27/00, H01R 31/00, B60L 53/14, B60L 53/16, H01R 13/621, H01R 31/06

(54) **AUTOLADESTECKVERBINDER**
VEHICLE CHARGING CONNECTOR
CONNECTEUR DE CHARGEMENT DE VÉHICULE

(30) Priorität: 17.03.2017 DE 102017105835; 18.04.2017 DE 102017108174
(43) Veröffentlichungstag der Anmeldung: 19.09.2018
(73) Patentinhaber: HARTING Automotive GmbH, 32339 Espelkamp (DE)
(72) Erfinder: Bruland, Alexander, 32369 Rahden (DE); Beimdieck, Carsten, 49565 Bramsche (DE)

(56) Entgegenhaltungen:
- DE-B3-102015 002 703
- DE-U1-202013 012 354
- JP-A- 2016 509 824
- US-A1- 2015 251 551
- US-B1- 8 226 424

## Beschreibung

Die Erfindung geht aus von einem Autoladesteckverbinder nach der Gattung des unabhängigen Anspruchs 1.

Derartige Autoladesteckverbinder übertragen bei einem Ladevorgang eines Elektrofahrzeugs hohe Ströme.

### Stand der Technik

Ein derartiger Autoladesteckverbinder ist aus der JP H06-290358 A bekannt, insbesondere als Ladestecker für ein Kraftfahrzeug. Mit dem vermehrten Aufkommen von Elektrofahrzeugen ist es erforderlich geworden, leicht handhabbare Möglichkeiten bereitzustellen, um die Batterien der Elektrofahrzeuge wieder aufzuladen. Dazu sind Ladestationen entwickelt worden, an denen Elektroautos mit Strom "betankt" werden können, ähnlich wie bei herkömmlichen Tankstellen, an denen Autos mit Benzin bzw. Diesel betankt werden.

Die US 2014/0084678 A1 zeigt einen Autoladesteckverbinder für ein Elektrofahrzeug mit zumindest zwei Kontaktelementen, wobei der Autoladesteckverbinder einen Steckverbinderkörper und einen Kontaktträger aufweist, welcher steckseitig am Steckverbinderkörper angeordnet ist, wobei der Kontaktträger reversibel am Steckverbinderkörper befestigt ist.

Die DE 10 2013 007 330 A1, FR 2 979 490 A1 und die US 2016/0288658 A1 zeigen jeweils einen Autoladesteckverbinder mit einem Adapter, damit der Autoladesteckverbinder in verschiedenen Ländersystemen eingesetzt werden kann.

Die DE 10 2011 106 335 A1 zeigt ein Verfahren, mit welchen ein Autoladesteckverbinder an verschiedene länderspezifische Ladeströme angepasst werden kann.

Die DE 10 2015 002 703 B3 zeigt einen zweipoligen Adapter für einen mehrpoligen Ladesteckverbinder eines Elektrofahrzeugs. Damit kann ein Elektrofahrzeug an haushaltsüblichen Steckdosen geladen werden.

Die DE 20 2013 012 354 U1 zeigt eine Ladesteckdose für ein Elektrofahrzeug. Die Ladesteckdose weist ein Kontaktmodul mit Kontaktelementen auf, welches auf ein Trennmodul mit Kontaktelemente aufsteckbar ist.

Das Elektroauto wird zum Aufladen der Batterien über ein Ladekabel mit der Ladestation verbunden. Das Ladekabel ist in der Regel an der Ladestation verankert und am Ende mit einem Autoladesteckverbinder ausgestattet, der in die dafür vorgesehene Ladebuchse eines Elektroautos steckbar ist. Da ein Elektroauto im täglichen Gebrauch sehr oft geladen wird, muss ein Autoladesteckverbinder viele Steckzyklen überstehen. Die recht hochpreisigen Autoladesteckverbinder müssen aus Sicherheitsgründen nach einer gewissen Anzahl von Steckzyklen ausgetauscht werden.

Die Autoladesteckverbinder sollen insbesondere für jedermann einfach steckbar und wieder entfernbar sein. Dies gilt insbesondere auch für kleine, weniger kräftige und zierliche Personen, die einen derartigen Stecker mit dem daran angebrachten Elektrokabel ebenfalls einfach und sicher handhaben können müssen.

### Aufgabenstellung

Die Aufgabe der Erfindung besteht darin, einen Autoladesteckverbinder für ein Elektrofahrzeug vorzuschlagen, welcher einfach handhabbar und kostengünstig zu betreiben ist.

Die Aufgabe wird durch den Gegenstand des unabhängigen Anspruchs 1 gelöst.

Vorteilhafte Ausgestaltungen der Erfindung sind in den Unteransprüchen angegeben.

Der erfindungsgemäße Autoladesteckverbinder ist zum Laden eines Elektrofahrzeugs vorgesehen. Der Autoladesteckverbinder weist zumindest eins, vorzugsweise jedoch zumindest zwei Signalkontaktelemente und zumindest zwei Leistungskontaktelemente auf.. Über die Signalkontaktelemente wird der Ladevorgang gestartet und im Betrieb elektronisch geregelt, je nach zu ladender Batterie und äußeren Bedingungen. Über die Leistungskontaktelemente wird häufig ein hoher Ladestrom übertragen, um den Ladevorgang schnell durchführen zu können. Der Autoladesteckverbinder weist einen Steckverbinderkörper und einen Kontaktträger auf. Der Kontaktträger ist steckseitig am Steckverbinderkörper angeordnet. Der Kontaktträger ist reversibel am Steckverbinderkörper befestigt.

Vorteilhafterweise bestehen die Signalkontaktelemente aus einem Kabelanschlussteil und einem Kontaktteil. Damit sind die Signalkontaktelementezweiteilig ausgebildet. Vorzugsweise ist dann das Kabelanschlussteil steckseitig als Buchse ausgeführt und das Kontaktteil anschlussseitig entsprechend als Kontaktstift ausgebildet. Über diese Buchsen-/Stiftverbindung können die Signalkontaktelemente reversibel zusammengesteckt und in eine elektrisch leitende Verbindung gebracht werden.

Bevorzugterweise sind die Kabelanschlussteile der Signalkontaktelemente im Steckverbinderkörper angeordnet und dort auch befestigt. Die Kontaktteile der Signalkontaktelemente sind im Kontaktträger angeordnet und dort befestigt. Die Befestigung kann beispielsweise über eine Verrastung realisiert werden.

In einer vorteilhaften Ausführungsform verfügt der Autoladesteckverbinder über ein zweiteiliges PE-Kontaktelement, bestehend aus einem Kabelanschlussteil und einem Kontaktteil. Das PE-Kontaktelement ist vergleichbar zu den Signalkontaktelementen aufgebaut und ebenfalls über das Buchse-/Stiftprinzip miteinander verbunden. Das Kabelanschlussteil ist im Steckverbinderkörper angeordnet und dort auch befestigt und das Kontaktteil ist im Kontaktträger angeordnet und dort befestigt.

Am Anschlussteil der Signalkontakte bzw. des PE-Kontakts wird ein Leiter des Ladekabels, vorzugsweise mithilfe der Crimptechnik angeschlossen. Am Kontaktteil wird ein elektrischer Kontakt zu einem Gegenkontaktelement der Ladebuchse hergestellt.

In einer besonders bevorzugten Ausführungsform der Erfindung sind die Leistungskontaktelemente im Steckverbinderkörper befestigt und zumindest ein Teil der Leistungskontaktelemente ragt in axialer Richtung in den Kontaktträger hinein. Die Leistungskontaktelemente sind im Steckverbinderkörper verankert bzw. befestigt, aber gerade nicht im Kontaktträger. Die Leistungskontakte sind gemäß vorangegangener Erfindung zweiteilig aufgebaut wobei der Kontaktträger bei Verschleiß ausgetauscht werden kann.

Der Kontaktträger ist reversibel am Steckverbinderkörper befestigt. Beim Abmontieren des Kontaktträger vom Steckverbinderkörper werden die zweiteiligen Signalkontaktelemente und das zweiteilige PE-Kontaktelement getrennt. Die jeweiligen Anschlussteile verbleiben im Steckverbinderkörper und die jeweiligen Kontaktteile bleiben im Kontaktträger. Die Leistungskontaktelemente sind jedoch nur im Steckverbinderkörper verankert und ragen - bei der Demontage des Kontaktträgers - steckseitig aus dem Steckverbinderkörper heraus. Rein theoretisch könnte der Autoladesteckverbinder auch ohne den Kontaktträger in eine Ladebuchse eines Elektroautos gesteckt werden. Da im Kontaktträger jedoch die Kontaktteile der Signalkontaktelemente fehlen, wird von der Ladestation kein Ladestrom übertragen bzw. der Ladevorgang nicht gestartet.

Der Kontaktträger kann nach Verschleiß oder nach einer entsprechenden Anzahl von Steckzyklen auch präventiv mit samt den Kontaktteilen der Signalkontaktelemente und des PE-Kontaktelements ausgetauscht werden. Es können aber auch auf einfache Weise auch nur die Kontakte im Kontaktträger ausgetauscht werden. Der Steckverbinderkörper mit samt dem angeschlossenen Ladekabel kann jedoch weiterverwendet werden.

Vorteilhafterweise bestehen die Leistungskontaktelemente aus einem Kabelanschlussteil und einem Kontaktteil. Das Kabelanschlussteil ist mit dem Kontaktteil über eine Schraubverbindung reversibel verbunden. Eine solche Verbindung ist mechanisch besonders stabil um hat Vorteile bei der Strombelastbarkeit der Leistungskontaktelemente. Ist der Kontaktträger abmontiert, können die Kontaktteile der Leistungskontaktelemente ausgetauscht werden, ohne das ein erneuter Anschluss an die entsprechenden Adern des Ladekabels erforderlich ist. Dadurch ist der vorgeschlagenen Autoladesteckverbinder besonders wartungsfreundlich.

Vorteilhafterweise ist der Kontaktträger über eine Schraubverbindung reversibel am Steckverbinderkörper befestigt. Dadurch kann der Austausch des Kontaktträgers einfach und schnell erfolgen. Durch die Austauschbarkeit des Kontaktträgers kann der Autoladesteckverbinder sehr preisgünstig betrieben werden, da ein Großteil von hochpreisigen Komponenten, die im Steckverbinderkörper untergebracht sind, weiterverwendet werden kann.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Autoladesteckverbinders,
- Fig. 2: eine perspektivische Darstellung des erfindungsgemäßen Autoladesteckverbinders mit abmontierten Kontaktträger,
- Fig. 3: eine perspektivische Darstellung des erfindungsgemäßen Autoladesteckverbinders ohne Kontaktträger und eine Ladebuchse und
- Fig. 4: eine schematische Darstellung des Kontaktbereichs des Steckverbinderkörpers und des Kontaktträgers.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

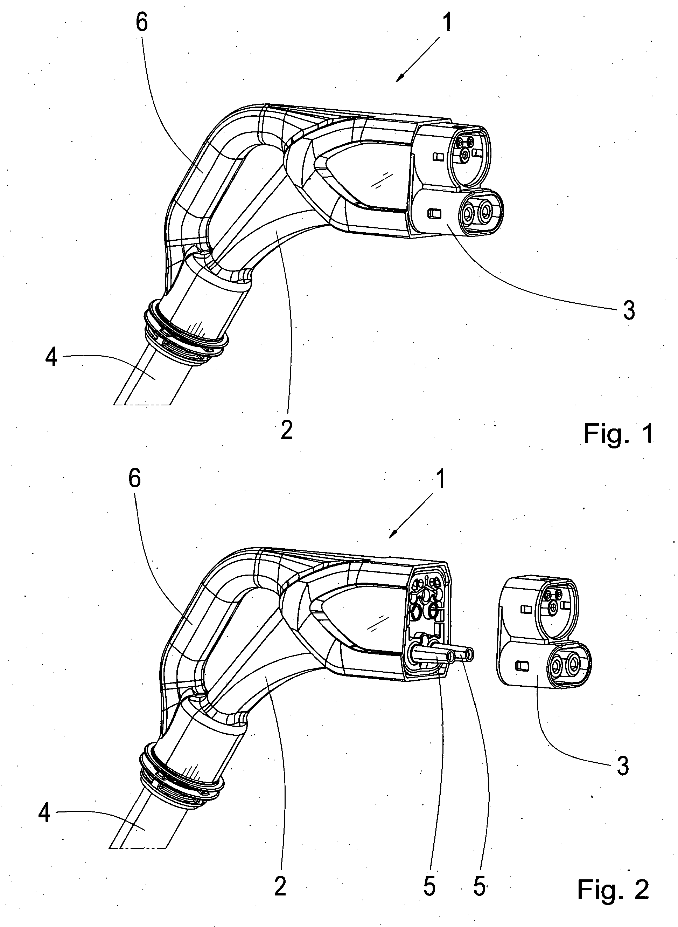

Die Figur 1 zeigt eine perspektivische Darstellung eines erfindungsgemäßen Autoladesteckverbinders 1. Der Autoladesteckverbinders 1 besteht im Wesentlichen aus einem Steckverbinderkörper 2 und einen steckseitig daran angeschraubten Kontaktträger 3. An dem Autoladesteckverbinder 1 ist ein Ladekabel 4 angeschlossen. Im Ladekabel 4 befinden sich einzelne Leiter (nicht gezeigt), die mit den entsprechenden Kontaktelementen des Autoladesteckverbinders elektrisch kontaktiert sind. Das Ladekabel 4 enthält auch eine Kühlflüssigkeitsleitung (nicht gezeigt), die direkt mit den Leistungskontaktelementen 5 verbunden ist. Dadurch können besonders hohe Ströme übertragen und ein schneller Ladevorgang realisiert werden. Die Leistungskontaktelemente 5 sind steckseitig als Buchsenkontakte ausgestaltet. Am Steckverbinderkörper 2 ist ein Griff 6 angeformt. Im Griffbereich verlaufen keine Leiter, die den Ladestrom übertragen, so dass der Griffbereich nicht überhitzen kann. Dadurch wird der Bedienkomfort des Autoladesteckverbinders 1 erhöht.

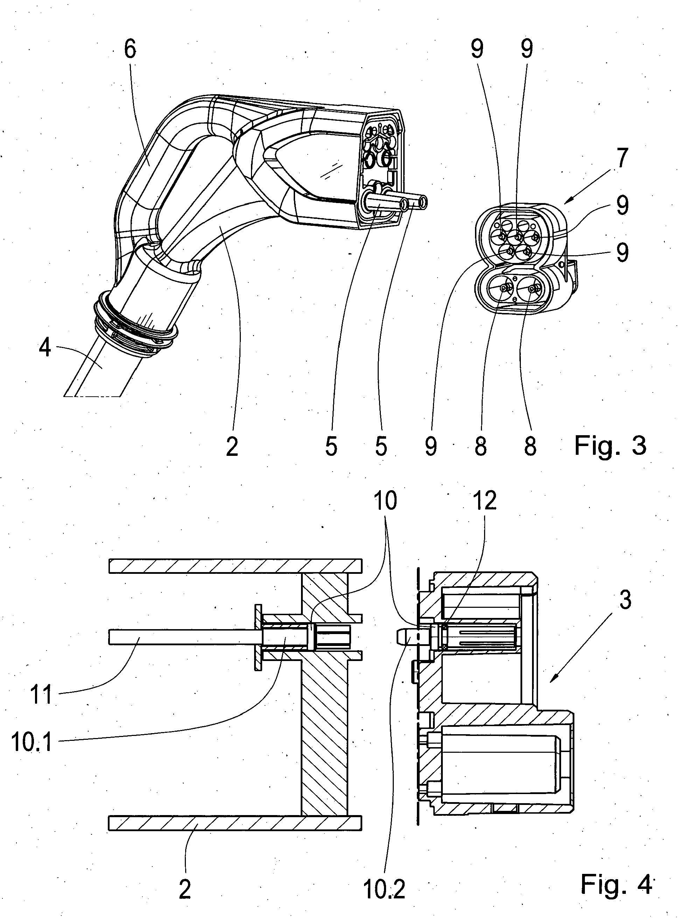

In Figur 3 ist eine Ladebuchse 7 zu sehen, die beispielsweise an einem Elektroauto (nicht gezeigt) zu finden ist. Die Ladebuchse 7 hat einen 8-förmigen Querschnitt. Im unteren Bereich sind zwei Kontaktelemente 8 zur Übertragung des Ladestroms angeordnet. Die Kontaktelemente 8 sind kontaktseitig als Kontaktstift ausgestaltet. Im oberen Bereich der Ladebuchse 7 sind weitere Kontaktelemente 9 angeordnet, die als PE-Kontakt bzw. als Signalkontaktelemente für den Ladevorgang fungieren. Theoretisch könnte der Steckverbinderkörper 2, ohne den daran angebrachten Kontaktträger 3, wie in Figur 3 dargestellt, in die Ladebuchse 7 eingesteckt werden. Die Leistungskontaktelemente 5 würden die zugehörigen Kontaktelemente 8 der Ladebuchse 7 in diesem Fall auch kontaktieren, aber es würde kein Strom fließen, da die Signalkontaktelemente des Steckverbinderkörpers 2 keinen elektrischen Kontakt zu den entsprechenden Kontaktelementen 9 der Ladebuchse haben.

In Figur 4 ist die zweiteilige Ausführung der Signalkontaktelemente und des PE-Kontaktelements am Beispiel des PE-Kontaktelements 10 dargestellt. Die Signalkontaktelemente sind identisch zum PE-Kontaktelement 10 ausgeführt. Aus Übersichtlichkeitsgründen sind die Leistungskontaktelemente 5 in Figur 4 nicht dargestellt. Das PE-Kontaktelement 10 besteht aus einem Kabelanschlussteil 10.1 und einem Kontaktteil 10.2. Am Kabelanschlussteil 10.1 ist ein PE-Leiter 11 des Ladekabels 4 angeschlossen. Hierfür wird eine Crimpverbindung gewählt. Steckseitig ist das Kabelanschlussteil 10.1 als Buchse ausgebildet. Das Kontaktteil ist anschlussseitig entsprechend als Kontaktstift und steckseitig als Buchse ausgeführt. Das Kabelanschlussteil 10.1 ist im Steckverbinderkörper fixiert. Das Kontaktteil 10.2 ist im Kontaktträger 3 verrastet, oder alternativ mit einem handelsüblichen Sprengring befestigt. Eine in einer Nut des Kontaktteils 10.2 angeordnete Dichtung 12 schützt den Autoladesteckverbinder 1 vor eindringende Feuchtigkeit.

Beim Zusammenführen von Steckverbinderkörper 2 und Kontaktträger 3 werden das Kabelanschlussteil 10.1 und das Kontaktteils 10.2 des PE-Kontaktelements 10 zusammengeführt und ineinandergesteckt und miteinander elektrisch verbunden. Selbiges geschieht mit den Signalkontaktelementen. Die Leistungskontaktelemente 5 sind lediglich im Steckverbinderkörper 5 verankert. Der vordere als Buchse ausgeführte Teil der Leistungskontaktelemente 5 durchdringt den Kontaktträger 3 in axialer Richtung, ist hier jedoch nicht verrastet oder sonst wie befestigt.

### Bezugszeichenliste

- 1: Autoladesteckverbinder
- 2: Steckverbinderkörper
- 3: Kontaktträger
- 4: Ladekabel
- 5: Leistungskontaktelement
- 6: Griff
- 7: Ladebuchse
- 8: Kontaktelement
- 9: Kontaktelement
- 10: PE-Kontaktelement
- 11: PE-Leiter
- 12: Dichtung

## Patentansprüche

1. Autoladesteckverbinder (1) für ein Elektrofahrzeug mit zumindest einem Signalkontaktelement (8, 9) und zumindest zwei Leistungskontaktelementen (5),
wobei der Autoladesteckverbinder (1) einen Steckverbinderkörper (2) und einen Kontaktträger (3) aufweist, welcher steckseitig am Steckverbinderkörper (2) angeordnet ist,
wobei der Kontaktträger (3) austauschbar am Steckverbinderkörper (2) befestigt ist
**dadurch gekennzeichnet,**
**dass** die Leistungskontaktelemente (5) aus einem Kabelanschlussteil und einem Kontaktteil bestehen und das Kabelanschlussteil mit dem Kontaktteil über eine Schraubverbindung austauschbar verbunden ist,
**dass** die Leistungskontaktelemente (5) im Steckverbinderkörper (2) befestigt sind und zumindest ein Teil der Leistungskontaktelemente (5) jeweils axial in den Kontaktträger (3) hineinragt und
**dass** ein Teil der Leistungskontaktelemente (5) unbefestigt im Kontaktträger (3) angeordnet ist,
**dass** der Autoladesteckverbinder ein zweiteiliges PE-Kontaktelement (10), bestehend aus einem Kabelanschlussteil (10.1) und einem Kontaktteil (10.2), aufweist und dass das Kabelanschlussteil (10.1) im Steckverbinderkörper (2) angeordnet und befestigt ist und das Kontaktteil (10.2) im Kontaktträger (3) angeordnet und befestigt ist und dass der Kontaktträger (3) über eine Schraubverbindung austauschbar am Steckverbinderkörper (2) befestigt ist.

2. Autoladesteckverbinder (1) nach vorstehendem Anspruch,
wobei der Autoladesteckverbinder (1) zumindest zwei Signalkontaktelemente aufweist.

3. Autoladesteckverbinder (1) nach einem der vorstehenden Ansprüche, wobei die Signalkontaktelemente jeweils aus einem Kabelanschlussteil und einem Kontaktteil bestehen und damit zweiteilig ausgebildet sind.

4. Autoladesteckverbinder nach Anspruch 1,
wobei das Kabelanschlussteil (10.1) des PE-Kontaktelements (10) steckseitig als Buchse ausgeführt ist und das Kontaktteil (10.2) anschlussseitig als Kontaktstift ausgebildet ist.

5. Autoladesteckverbinder nach Anspruch 2,
wobei die Kabelanschlussteile der Signalkontaktelemente im Steckverbinderkörper (2) angeordnet und befestigt sind und die Kontaktteile der Signalkontaktelemente im Kontaktträger (3) angeordnet und befestigt sind.

6. Autoladesteckverbinder nach einem der vorstehenden Ansprüche,
wobei am Steckverbinderkörper (2) ein Haltegriff (6) angeformt ist.

## Claims

1. Vehicle charging plug-in connector (1) for an electric vehicle comprising at least one signal contact element (8, 9) and at least two power contact elements (5),
wherein the vehicle charging plug-in connector (1) has a plug-in connector body (2) and a contact carrier (3) which is arranged on the plug-in side of the plug-in connector body (2),
wherein the contact carrier (3) is fastened to the plug-in connector body (2) in an exchangeable manner,
**characterized**
**in that** the power contact elements (5) consist of a cable connection part and a contact part, and the cable connection part is connected to the contact part in an exchangeable manner by means of a screw connection,
**in that** the power contact elements (5) are fastened in the plug-in connector body (2) and at least some of the power contact elements (5) each protrude axially into the contact carrier (3), and
**in that** some of the power contact elements (5) are arranged in an unfastened manner in the contact carrier (3),
**in that** the vehicle charging plug-in connector has a two-part PE contact element (10) consisting of a cable connection part (10.1) and a contact part (10.2), and in that the cable connection part (10.1) is arranged and fastened in the plug-in connector body (2), and the contact part (10.2) is arranged and fastened in the contact carrier (3), and in that the contact carrier (3) is fastened in an exchangeable manner to the plug-in connector body (2) by means of a screw connection.

2. Vehicle charging plug-in connector (1) according to the preceding claim,
wherein the vehicle charging plug-in connector (1) has at least two signal contact elements.

3. Vehicle charging plug-in connector (1) according to either of the preceding claims,
wherein the signal contact elements each consist of a cable connection part and a contact part and are therefore of two-part design.

4. Vehicle charging plug-in connector according to Claim 1,
wherein the cable connection part (10.1) of the PE contact element (10) is embodied as a socket on the plug-in side and the contact part (10.2) is designed as a contact pin on the connection side.

5. Vehicle charging plug-in connector according to Claim 2,
wherein the cable connection parts of the signal contact elements are arranged and fastened in the plug-in connector body (2), and the contact parts of the signal contact elements are arranged and fastened in the contact carrier (3).

6. Vehicle charging plug-in connector according to one of the preceding claims,
wherein a handle (6) is integrally formed on the plug-in connector body (2).

## Revendications

1. Connecteur de recharge d'automobile (1) destiné à un véhicule électrique, comportant au moins un élément de contact de signal (8, 9) et au moins deux éléments de contact de puissance (5),
le connecteur de recharge d'automobile (1) comportant un corps de connecteur (2) et un support de contact (3) qui est disposé côté fiche sur le corps de connecteur (2),
dans lequel le support de contact (3) est fixé de manière interchangeable au corps de connecteur (2),
**caractérisé en ce que**
les éléments de contact de puissance (5) se composent d'une partie de raccordement de câble et d'une partie de contact et la partie de raccordement de câble est reliée de manière interchangeable à la partie de contact par l'intermédiaire d'une liaison vissée,
**en ce que** les éléments de contact de puissance (5) sont fixés dans le corps de connecteur (2) et au moins une partie des éléments de contact de puissance (5) fait respectivement saillie axialement dans le support de contact (3) et
**en ce qu'**une partie des éléments de contact de puissance (5) est disposée de manière non fixée dans le support de contact (3),
**en ce que** le connecteur de rechargé d'automobile comporte un élément de contact PE en deux parties (10), constitué d'une partie de raccordement de câble (10.1) et d'une partie de contact (10.2) et **en ce que** la partie de raccordement de câble (10.1) est disposée et fixée dans le corps de connecteur (2) et la partie de contact (10.2) est disposée et fixée dans le support de contact (3) et **en ce que** le support de contact (3) est fixé de manière interchangeable au corps de connecteur (2) par l'intermédiaire d'une liaison vissée.

2. Connecteur de recharge d'automobile (1) selon la revendication précédente, le connecteur de recharge d'automobile (1) comportant au moins deux éléments de contact de signal.

3. Connecteur de recharge d'automobile (1) selon l'une des revendications précédentes, dans lequel les éléments de contact de signal se composent respectivement d'une partie de raccordement de câble et d'une partie de contact et sont ainsi réalisés en deux parties.

4. Connecteur de recharge d'automobile selon la revendication 1, dans lequel la partie de raccordement de câble (10.1) de l'élément de contact PE (10) est réalisée côté fiche sous la forme d'une douille et la partie de contact (10.2) est réalisée côté raccordement sous la forme d'une broche de contact.

5. Connecteur de recharge d'automobile selon la revendication 2, dans lequel les parties de raccordement de câble des éléments de contact de signal sont disposées et fixées dans le corps de connecteur (2) et les parties de contact des éléments de contact de signal sont disposées et fixées dans le support de contact (3).

6. Connecteur de recharge d'automobile selon l'une des revendications précédentes, dans lequel une poignée (6) est formée d'un seul tenant sur le corps de connecteur (2).
